# EUROPEAN PATENT SPECIFICATION

(11) **EP 1 825 942 B1**
(45) Date of publication and mention of the grant of the patent: **31.12.2008**
(21) Application number: 06425112.7
(22) Date of filing: 23.02.2006
(51) Int. Cl.: B23B 23/00

(54) **Compensation device for deformations correction after roughing**
Ausgleichsvorrichtung zur Verformungskorrektur nach Schruppen
Dispositif de compensation pour correction de déformation après dégrossissage

(43) Date of publication of application: 29.08.2007
(73) Proprietor: C.B. Ferrari S.p.A., 21020 Mornago VA (IT)
(72) Inventor: Bianchi, Renato, 21020 Mornago VA (IT)

(56) References cited:
- EP-A- 0 353 004
- CH-A5- 656 564
- DE-A1- 2 200 800
- DE-A1- 2 305 486
- DE-A1- 3 909 848
- US-A- 3 937 111
- US-A- 4 068 547

## Description

### BACKGROUND OF THE INVENTION

### FIELD OF THE INVENTION

The present invention relates generally to automatic deformation compensation devices capable of compensating for undesired deformations of a workpiece during machining operations.

### PRIOR ART

The deformation compensation of a workpiece is conventionally accomplished by manually adjusting the position of the engaging point with the workpiece in the plane perpendicular to the support axis.
A variety of prior art devices (tailstocks) exist for the radial compensation, but they cannot be used inside a synchronized rotary gantry axis system: in this case machining torque must be transmitted to the workpiece from both ends. On the other hand only manual adjustements can be made by a well trained operator.

### SUMMARY OF INVENTION

It is an object of the present invention to provide a new and improved system to compensate the deformation of the workpiece in an automatic way. The compensation is for radial and torsional direction. The system can be used inside a synchronized rotary gantry axis system.
The stress relieving allowed by the device after the roughing operation let the workpiece achieve its natural position (deformed).
Living enough stock on the workpiece during the roughing operation (greater than the deformation expected), the finishing operation can be performed immediately without losing the zero point. In such a way the deformation compensation is automatic.

### BRIEF DESCRIPTION OF THE DRAWINGS

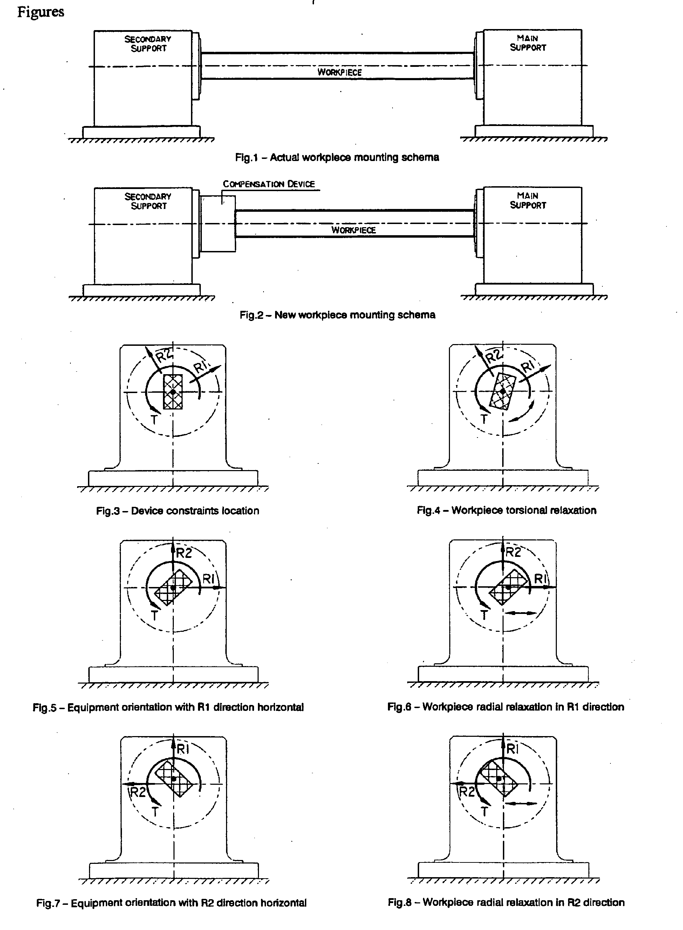

Fig. 1 - Actual workpiece mounting schema
Fig. 2 - Workpiece mounting schema with compensation device
Fig. 3 - Device constraints location
Fig. 4 - Workpiece torsional relaxation
Fig. 5 - Equipment orientation with R1 direction horizontal
Fig. 6 - Workpiece radial relaxation in R1 direction
Fig. 7 - Workpiece radial relaxation in R1 direction
Fig. 8 - Workpiece radial relaxation in R2 direction

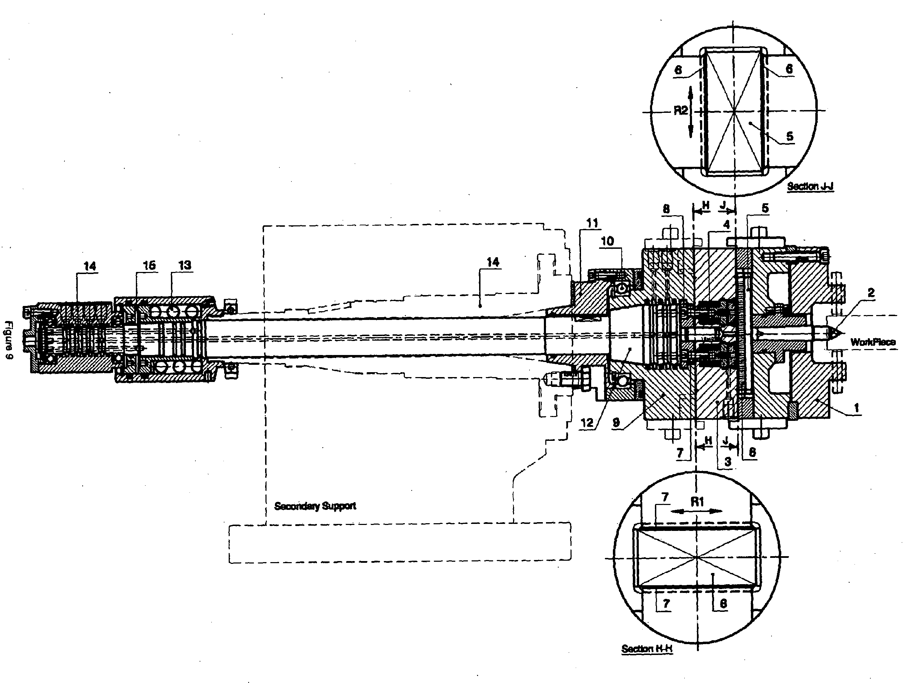

Fig. 9 - Sectional view of the compensation device

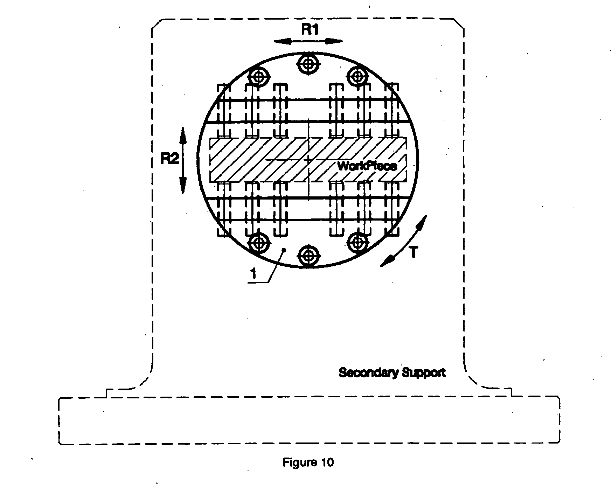

Fig.10- Front view of the compensation device

### DETAILED DESCRIPTION OF THE AUTOMATIC DEVICE

The compensation device enables the unlock of the rigid constraint between the workpiece and the secondary support spindle activating three degrees of freedom. This activation let the workpiece join a full relaxed position releasing any type of stress, without further operations.
1. A tapered flange (11), aligned and tightened to the secondary support spindle (14), holds the automatic compensation device.
2. The automatic device it's torsionally constrained to the secondary support spindle by the spring actuated tapered drawbar (12). A tapered flange (9) is pushed against the flange (11) by the drawbar spring (13) and the friction between tapers keep the system costrained. Giving hydraulic pressure to the cylinder (15) the drawbar spring force will be annealed and the compensation device with the worpiece will be free to rotate, supported by the radial bearing (10).
3. The sub-system made by central cross-slide system (3), flange (1), tailstock (2) and workpiece it's radially constrained along R1 direction to the flange (9) by six spring actuated hydraulic cylinders. The clamping system (8) is locked by the springs force. Giving hydraulic pressure to the cylinders the springs load will be annealed, the clamping system (8) will be released and central cross-slide system, flange, tailstock and workpiece will be free to move along the R1 radial direction supported by rollers slideways (7).
4. The sub-system made by flange (1), tailstock (2) and workpiece it's radially constrained along R2 direction to the central cross-slide system (3) by six spring actuated hydraulic cylinders. The clamping system (5) is locked by the springs force as for R1 direction. Giving hydraulic pressure to the cylinders the springs load will be annealed, the clamping system (5) will be released and flange, tailstock and workpiece will be free to move along the R2 radial direction supported by rollers slideways (6).
5. The clamping flange (1) holds the workpiece keeping its center-hole on the tailstock (2).
6. The hydraulic pressure is carried to the right final destination by the hydraulic rotary union (14).

The operation of the above described device will now be described:
The device is normally locked. The constraints are removed automatically by NC program.
The relaxation procedure must be executed with the following sequence:
   1. remove T rotational rigid constraint,
   2. workpiece torsional relaxation,
   3. restore T rotational rigid constraint,
   4. orient the equipment so that the radial translation R1 is horizontal,
   5. remove the radial R1 translation rigid constraint,
   6. workpiece radial relaxation in direction 1 (horizontal). The relaxation must be performed in horizontal position so that the part's weight doesn't influence the natural position,
   7. restore R1 translational rigid constraint,
   8. rotate the equipment (and the workpiece) by 90° so that the radial translation R2 is
   horizontal,
   9. remove the radial R2 translation rigid constraint,
   10. workpiece radial relaxation in direction 2 (horizontal). The relaxation must be performed in horizontal position so that the part's weight doesn't influence the natural position,
   11. restore R2 translational rigid constraint.

The main advantages introduced by the equipment are:
- the radial and torsional deformations compensation is automatic, without manual correction from a skilled man;
- the device can be used inside a synchronized gantry rotary axis system;
- finish machining is performed immediately after roughing and relaxation cycle;
- the whole machining cycle (roughing, part relaxation and finish machining) is performed in one process and can be programmed and automatically executed on NC machines. No manual adjustment are requested.

## Claims

1. Workpiece support wherein the workpiece is fixed between a first and a secondary support, comprising
- a compensation device which is a removable constraint located between the workpiece and the secondary support,
wherein the compensation device being operated
- in a locked state in which the workpiece and the secondary support are rigidly constrained and the processing of the workpiece takes place and
- in an unlocked state in which the workpiece is totally free to move respect to the secondary support and thereby the constraint is removed,
wherein the activation of the compensation device is performed without removing the workpiece from the machine and without losing the workpiece machining origin,
wherein the compensation device enables first and second degree of freedom which are translational degrees of freedom and enable the workpiece's end to translate in two perpendicular directions laid on a plane normal to the supports axis, defining displacement vectors composition in a radial direction and thereby enables radial relaxation,
thereby achieving a full relaxed position of the workpiece releasing any type of stress, without further operations,
**characterised in that** the compensation device enables a third degree of freedom which is a rotational degree of freedom and which enables the workpiece's end to rotate around the supports axis and thereby enables torsional relaxation.

2. Workpiece support according to claim 1, wherein the radial and torsional relaxation are automatic, without manual correction from a skilled man.

3. Method of using the workpiece support according to claims 1 or 2, wherein the finish machining is performed immediately after roughing and relaxation cycle.

## Patentansprüche

1. Das Werkstückstütze, in der das Werkstück zwischen einer primären und einer sekundären Stütze befestigt ist, bestehend aus:
• Die Entspannungsvorrichtung: eine Ausgleichachse zwischen dem Werkstück und der sekundären Stütze
• in blockiertem Zustand: das Werkstück und die sekundäre Stütze sind steif befestigt und die Bearbeitung des Werkstücks wird ausgeführt.
• in einem freigegebenen Zustand das Werkstück kann sich gegenüber der sekundären Achse frei bewegen. Die Spannung wird beseitig durch die Ausgleichvorrichtung, ohne dass das Werkstück von der Maschine entfernt wird und ohne dass die ursprüngliche Bearbeitungsstelle des Werkstücks verloren geht. Die Ausgleichvorrichtung lässt den ersten und sekundären Freiheitsgrad aktiv. Diese Freiheitsgrade sind Translationsfreiheitsgrade und gewährleisten, dass das Ende des Werkstücks in zwei senkrechte Richtungen auf einer zur Stützachse senkrecht stehenden Ebene fährt. Die Verschiebungsvektoren werden in einer Radialrichtung bestimmt und die Radialentspannung erfolgt. Daher erreicht das Werkstück die spannungsfreie Position ohne Beanspruchungen und weiterer Verfahren. Die Ausgleichvorrichtung aktiviert den dritten Freiheitsgrad, der ein Rotationsfreiheitsgrad ist, in dem sich das Ende des Werkstücks um die Stützachse drehen kann und die Drehentspannung ausgeführt wird.

2. Stütze des Werkstücks gemäß Anspruch 1: die Radial- und Drehentspannung erfolgt automatisch, keine Handregelung durch einen Facharbeiter ist notwendig.

3. Gebrauchsart der Stütze des Werkstücks gemäß Anspruch 1 oder 2: die Schlichtbearbeitung erfolgt sofort nach dem Relaxationszyklus und nach dem Schruppoperation.

## Revendications

1. Support de la pièce où la pièce est fixée entre un support primaire et un support secondaire formé de:
- Un dispositif de compensation qui est une contrainte éliminable, placée entre la pièce et le support secondaire, où le dispositif de compensation fonctionne dans les conditions suivantes:
- dans un état de blocage où la pièce et le support secondaire sont liés rigidement et où la pièce est usinée et
- dans un état de déblocage où la pièce est complètement libre de se déplacer par rapport au support secondaire et de cette façon la contrainte est éliminée; le dispositif de compensation est activé sans enlever la pièce de la machine et sans perdre la position d'usinage initiale de la pièce où le dispositif de compensation permet le premier et le second degré de liberté qui sont des degrés de liberté de translation permettant à la partie finale de la pièce de se déplacer en deux directions perpendiculaires sur un plan perpendiculaire à l'axe du support. Les vecteurs de déplacement sont déterminés en direction radiale habilitant ainsi la relaxation radiale, ce qui permet d'obtenir une position de relaxation complète sans contraintes et sans aucune opération additionnelle, car le dispositif de compensation active un troisième degré de liberté qui est un degré de liberté rotationnelle et qui permet à la partie finale de la pièce de tourner autour de l'axe du support et donc d'habiliter la relaxation de torsion.

2. Support de la pièce conformément à la revendication 1, où la relaxation radiale et la relaxation de torsion sont automatiques, sans aucune correction manuelle par un ouvrier spécialisé.

3. Méthode d'emploi du support de la pièce conformément aux revendications 1 ou 2, où le finissage a lieu immédiatement après le cycle de dégrossissage et de relaxation.
